# FASCICULE DE BREVET EUROPEEN

(11) **EP 2 832 669 B1**
(45) Date de publication et mention de la délivrance du brevet: **06.04.2016**
(21) Numéro de dépôt: 14002350.8
(22) Date de dépôt: 09.07.2014
(51) Int. Cl.: B65G 69/00

(54) **Dispositif et procédés relatifs à l'immobilisation d'un camion**
Vorrichtung und Verfahren bezüglich der Blockierung eines LKW
Device and methods related to the immobilisation of a truck

(30) Priorité: 31.07.2013 FR 1301870
(43) Date de publication de la demande: 04.02.2015
(73) Titulaire: EXPRESSO France SAS, 67319 Wasselonne (FR)
(72) Inventeur: Valentin, Guy, 67319 Wasselonne (FR)
(74) Mandataire: Munier, Laurent

(56) Documents cités:
- FR-A1- 2 736 336
- US-A1- 2010 170 754
- US-A1- 2011 162 916

## Description

La présente invention se rapporte à l'immobilisation de véhicules roulants typiquement de camions.

Deux types d'immobilisations de véhicules sont utilisés.

D'une part le calage, la roue vient s'appuyer sur une cale. Ce type d'immobilisation connue présente le risque que le camion passe par-dessus la cale et sorte de l'immobilisation entrainant des risques d'accidents.

D'autre part, le blocage. Les quais de transbordement sont équipés de moyens de guidage du véhicule perpendiculaire au quai. Il est connu de placer des mécanismes bloqueurs dans ces moyens de guidage (voir US 3 305 049 et DE 4 427 406).

L'invention concerne en premier lieu un dispositif bloqueur de roue pendant la mise en oeuvre d'une procédure de chargement et déchargement dudit véhicule.

De tels dispositifs sont connus par le document EP 2 236 445 au nom d'EXPRESSO France qui enseigne que ces dispositifs permettent d'immobiliser des véhicules de différentes tailles possédant des roues de différents diamètres et avec une qualité de blocage constante, quelque soit ledit diamètre.

Le dispositif d'immobilisation de véhicule de transport de marchandises pendant les phases de transbordement dudit véhicule, par action sur le pneu d'une de ses roues, comprend un moyen de guidage latéral dudit véhicule positionné parallèlement à la direction de roulement du véhicule à immobiliser, un chariot mobile le long du moyen de guidage, un moyen de déplacement dudit chariot le long du moyen de guidage et un moyen de verrouillage dudit chariot sur ledit moyen de guidage, un moyen de détection du pneu, une pièce de calage dont une extrémité est fixée sur le châssis du dispositif, un mécanisme de rotation de ladite pièce de calage.

Pour permettre l'automatisation, le dispositif connu demande en plus un moyen de mesure du diamètre du pneu et un moyen de traitement de ladite mesure en vue du réglage de la position angulaire de ladite pièce de calage.

Les dispositifs connus sont automatiques, ce qui demande de l'entretien, une installation électrique conséquente, un circuit hydraulique ou autres moyens d'actionnement automatique.

Par conséquent, une certaine lourdeur ou volume qui entrainent beaucoup d'étapes de fabrication et un prix conséquent.

Les systèmes automatiques peuvent être sensibles aux conditions climatiques. Par exemple, le froid peut figer l'huile.

Le dispositif manuel comme les systèmes automatiques connus présente un chariot qui coulisse sur un rail de guidage servant au marquage de la place de chargement et déchargement du véhicule typiquement un camion.

Le chariot de ce dispositif connu présente deux poignées manuelles : l'une, pour le déplacement du chariot, l'autre, pour le déploiement du bras de blocage sous forme de ciseaux. Ces ciseaux sont constitués de biellettes articulées par un axe.

Pendant le déploiement des ciseaux tout le chariot pivote sur deux axes placés à l'extérieur du rail.

Ce système est compliqué et confus pour le camionneur utilisateur et demande de nombreuses étapes de fabrication.

Ce système connu présente aussi l'inconvénient de se replier vers le haut. Par conséquent de se prendre dans la roue ou le garde boue du véhicule.

De plus, la roue produisant une pression demande une force supplémentaire pour déverrouiller le système.

Par le document US 2010/170754 A1 (BROOKS ANDREW (US) ET AL), il est connu un dispositif d'immobilisation de véhicule de transport de marchandises pendant les phases de transbordement dudit véhicule, par action sur le pneu d'une de ses roues, comprenant un moyen de guidage latéral dudit véhicule positionné parallèle à la direction de roulement du véhicule à immobiliser, un chariot mobile le long dudit moyen de guidage, un moyen de placement dudit chariot le long du moyen de guidage et un moyen de verrouillage dudit chariot sur ledit moyen de guidage, une pièce de calage dont une extrémité est fixée sur le châssis du dispositif, un mécanisme de positionnement de ladite pièce de calage, le moyen de guidage étant typiquement un châssis comprenant notamment une poutre, un rail et deux plots. Le chariot connu comprend un bras pivotant du bas vers le haut, de la position repos vers la position arrêt dite travail, une poignée composée du moyen de déplacement permet d'actionner manuellement le déplacement du chariot sur la poutre, une deuxième poignée permettant la mise en place du bras. Ce document décrit donc un dispositif selon le préambule de la revendication 1.

L'invention a pour but de résoudre ces inconvénients aussi bien ceux accompagnant les systèmes automatiques que ceux des systèmes de blocage manuel connus et de proposer un dispositif moins couteux et plus fiable.

Afin de palier à ces inconvénients par un système de blocage simple et manuel. Le dispositif d'immobilisation de véhicule de transport de marchandises pendant les phases de transbordement dudit véhicule, selon l'invention est un dispositif par action sur le pneu d'une des roues du véhicule à immobiliser. Il comprend, un moyen de guidage latéral dudit véhicule positionné parallèlement à la direction de roulement du véhicule à immobiliser, un chariot mobile le long dudit moyen de guidage, un moyen de placement dudit chariot le long du moyen de guidage et un moyen de verrouillage dudit chariot sur ledit moyen de guidage, une pièce de calage dont une extrémité est fixée sur le châssis du dispositif, un mécanisme de positionnement de ladite pièce de calage. Le moyen de guidage est typiquement un châssis comprenant une poutre un rail et deux plots.

Le dispositif se caractérise par le chariot présentant une forme simple comprenant au moins un tube de guidage sur la poutre et des pièces support d'au moins une pelle pivotante du bas vers le haut, de la position repos vers la position arrêt dite travail, une seule poignée composée du moyen de déplacement permet d'actionner manuellement le déplacement du chariot sur la poutre et également la mise en place de la pelle support du bras par pivotement sous l'effet d'un système de bielles, l'extrémité de la tige poignée se déplaçant dans la lumière ovale en forme de haricot central d'au moins une première bielle articulée à extrémité liée en rotation à au moins une deuxième bielle liée en rotation à la pelle ; la première bielle étant liée en rotation au chariot et sa deuxième extrémité étant équipée d'une butée venant verrouiller le chariot en position travail sur le châssis du chariot, l'emplacement des axes des biellettes verrouillant la pelle en position travail, position haute.

Selon un mode de réalisation préféré de l'invention, le bras de pivotement se déplace dans les lumières de deux premières bielles à lumière en forme de haricot pour répartir les forces appliquées.

La présente invention propose également un procédé d'immobilisation d'un véhicule de transport de marchandises pendant les phases de transbordement dudit véhicule, par action sur le pneu d'une de ses roues, au moyen d'un dispositif d'immobilisation manuel comprenant un moyen de guidage latéral dudit véhicule positionné parallèlement à la direction de roulement du véhicule à immobiliser, un chariot mobile le long du moyen de guidage et un moyen de verrouillage dudit chariot sur ledit moyen de guidage, une pièce de verrouillage dont une extrémité est fixée sur le châssis du dispositif, conforme audit dispositif décrit ci-dessus et comprenant les étapes suivantes :
- Positionnement du véhicule parallèle au dispositif de blocage,
- Translation du chariot par action manuelle de l'utilisateur sur la poutre de la position repos du chariot à la position de la roue du véhicule au moyen de la poignée, puis
- actionnement en rotation de la poignée déclenchant :
   ▪ déploiement de la pelle vers le haut,
   ▪ coulissement de l'axe de la poignée vers le haut de la lumière,
   ▪ l'entrainement de l'axe de liaison des première(s) et deuxième(s) biellettes aux franchissements du plan médian par lequel passe les deux autres axes des biellettes,
   ▪ franchissement du plan médian verrouillant la pelle en position de travail.

L'invention se rapporte aussi au procédé de fabrication d'un chariot simple et universel adapté à un rail aussi bien droite ou gauche de stationnement blocage de véhicule par assemblage et réglage d'au moins une pelle pivotante un bras poignée symétriques et des bielles conformes à ceux décrits ci-dessus.

L'invention a encore pour objet l'utilisation d'un dispositif tel que décrit ci-dessus pour le chargement ou le déchargement de marchandises d'un véhicule à un système de chargement et déchargement comprenant des moyens :
- de signalétique, notamment attente véhicule,
- d'immobilisation manuelle,
- d'attente camion avant calage,
- de décompte du temps entre deux signaux,
- d'ouverture porte,
- de mise en place du niveleur,
- de chargement ou déchargement,
- de rangement du niveleur,
- de fermeture de porte,
- d'autorisation du décalage,
- du déblocage camion,
- du rangement chariot.

D'autres avantages de l'invention apparaitront à la lecture de la description des dessins donnée à titre non limitatif et dans laquelle :
La fig. 1 est une vue en élévation d'un moyen de guidage comprenant un dispositif de blocage en position travail selon l'invention, utilisé dans un système de chargement et déchargement de véhicules ;
La fig. 2 est une vue en élévation du moyen de guidage selon la fig. 1 le dispositif de blocage étant en position repos ;
La fig. 3 est une représentation de face du dispositif selon l'invention se déplaçant sur le rail au moyen de guidage avec emplacements a, b, c, correspondant aux différents emplacements de chariot ;
La fig. 4 est une représentation de dessus du dispositif de la figure 3 ;
La fig. 5 est une représentation en élévation du chariot selon l'invention ;
Les fig. 6 et 7 représentent les deux premières biellettes de la variante à deux biellettes à lumière en forme de haricot ;
La fig. 8 représente la pelle montée sur le chariot de la fig. 1 ;
La fig. 9 représente vue en éclaté les pièces du chariot selon la fig. 1 ;
La fig. 10 représente les pièces de la fig. 9 assemblées pour former le chariot.

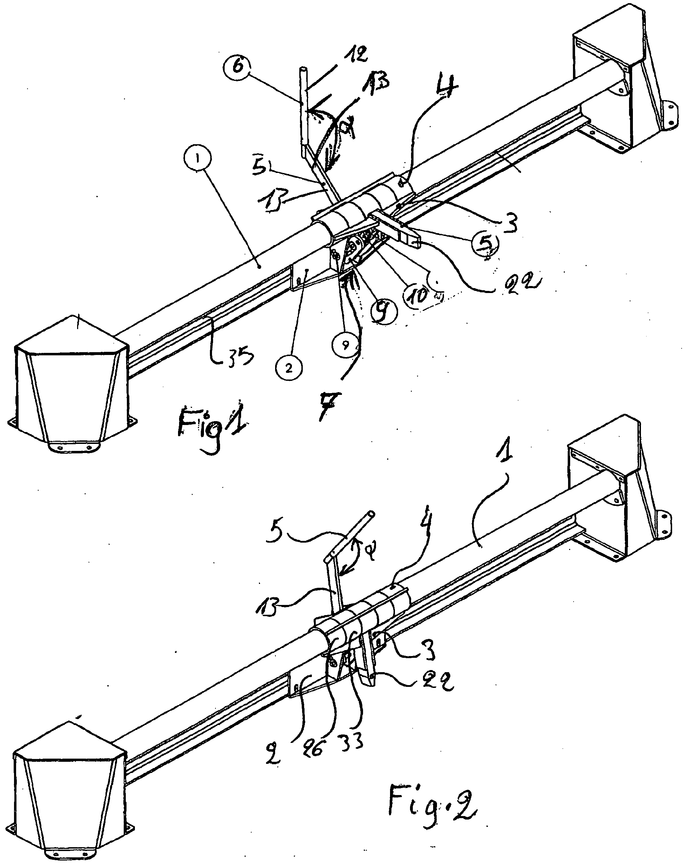

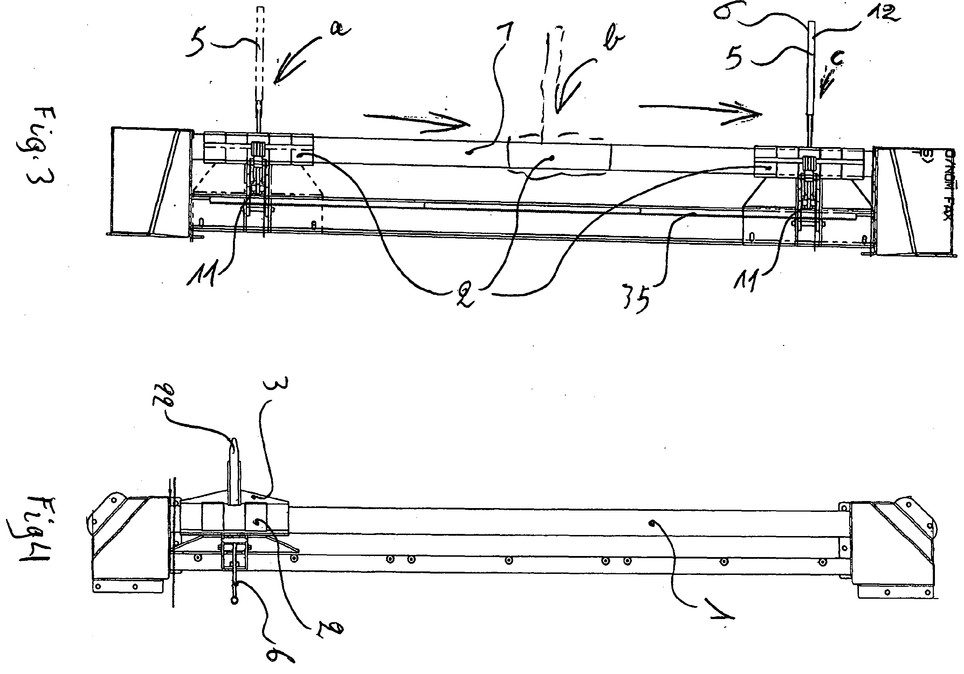

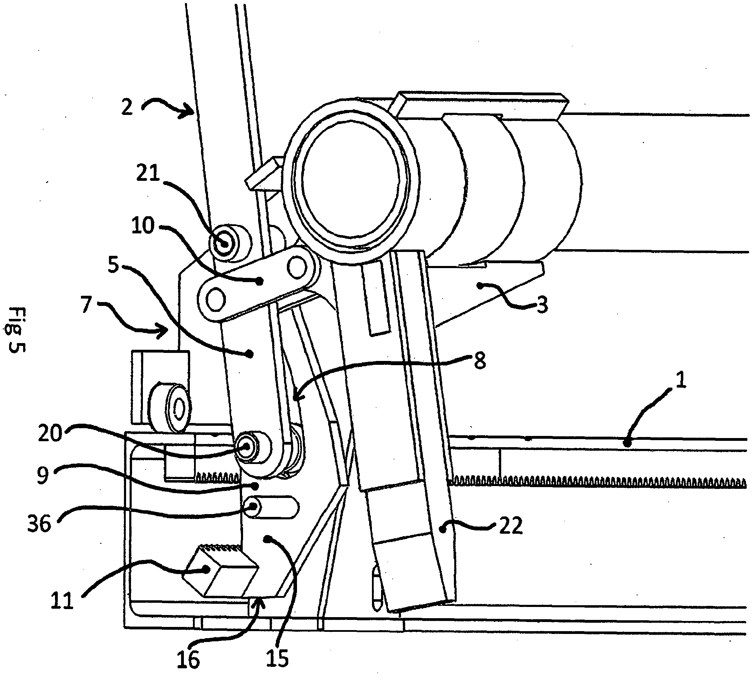

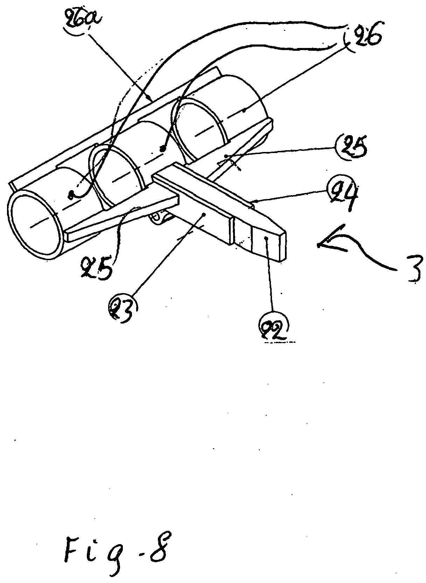

Le dispositif d'immobilisation de véhicule représenté figures 1 à 8 est disposé sur un châssis comprenant notamment une poutre 1 un rail et deux plots. Ce dispositif comprend un chariot 2 qui coulisse sur la poutre 1 et une pelle pivotante 3 qui immobilise la roue du véhicule en position relevée.

Ce dispositif comprend un moyen de guidage latéral G dudit véhicule positionné parallèle à la direction de roulement R du véhicule à immobiliser, un chariot mobile 2 le long dudit moyen de guidage G, un moyen de placement P dudit chariot le long du moyen de guidage G et un moyen de verrouillage V dudit chariot sur ledit moyen de guidage, une pièce de calage C dont une extrémité est fixée sur le châssis du dispositif, un mécanisme de positionnement P de ladite pièce de calage.

Le chariot 2 présente une forme simple comprenant un tube de guidage 4 sur la poutre 1 et des pièces des pièces support d'au moins une pelle 3 pivotante du bas vers le haut, de la position repos vers la position arrêt dite travail. Une poignée composée du moyen de déplacement permet d'actionner manuellement le déplacement en translation du chariot 2 sur la poutre 1 et également la mise en place de la pelle support du bras par pivotement 6 sous l'effet d'un système de bielles 7, l'extrémité de la tige poignée se déplaçant dans la lumière ovale en forme de haricot central d'au moins une première bielle articulée à extrémité liée en rotation à au moins une deuxième bielle liée en rotation à la pelle. La première bielle étant liée en rotation au chariot et sa deuxième extrémité étant équipée d'une butée 11 vient verrouiller le chariot 2 en position travail sur le châssis du chariot. L'emplacement des axes des biellettes verrouille la pelle en position travail, la position haute.

Le procédé de fabrication du dispositif de blocage comprend plusieurs étapes dont la fabrication du chariot 2, la fabrication de la pelle pivotante 3, la fabrication du système de bielles 7 et de la poignée 5.

La poignée de manoeuvre 5 est fabriquée par l'assemblage d'un tube rond de manoeuvre 12 fixé à une extrémité d'une tige rectangulaire 13 de manière à former un angle α entre le tube 12 et la tige 13.

Selon une variante de réalisation, le système de bielles 7 est fabriqué par la fabrication de deux premières bielles symétriques 9a et 9b à partir de flasques dans lesquelles sont percés dans chacune de leur partie centrale une lumière en forme de haricot 8, une extrémité 14 est arrondie et au centre de la partie arrondie est percé un trou cylindrique avec épaulement.

L'autre extrémité 15 de la bielle 9a, 9b est usinée de façon à obtenir des surfaces rectilignes 16 formant des angles. Ces surfaces rectilignes calent la contre crémaillère 11.

Deux trous 17, 18 sont percés sensiblement au centre de l'extrémité 15.

La contre crémaillère 11 assemble les deux bielles 9a et 9b parallèlement et symétriquement l'une par rapport à l'autre.

Un ergot 19 respectif par bielle 9a 9b est placé en position intérieure dans chacun des trous à épaulement pour suivre l'axe de pivotement.

La tige rectangulaire 13 de la poignée 5 est guidée par la lumière en forme de haricot 8 par un ergot 20 monté à sa deuxième extrémité.

Les deux deuxièmes bielles 10 sont rectilignes, assemblées de chaque côté de la tige 13. Un ergot central 20 monté sur la tige 13 emprisonne de manière coulissante et pivotante les deuxièmes bielles 10 avec l'ergot d'extrémité 20.

La pelle pivotante 3 est fabriquée par l'assemblage d'un doigt 22 dans deux flasques 23, 24.

Deux renforts 25 sont soudés au contact de l'extrémité arrière des flasques 23, 24 en s'étendant perpendiculairement auxdits flasques comme des ailes.

Trois cylindres creux 26 sont soudés espacés sur les renforts 25.

Un renfort arrière 26a est soudé sur lesdits cylindres 26 pour rigidifier l'ensemble.

Le diamètre intérieur des cylindres creux s'ajuste à la poutre 1.

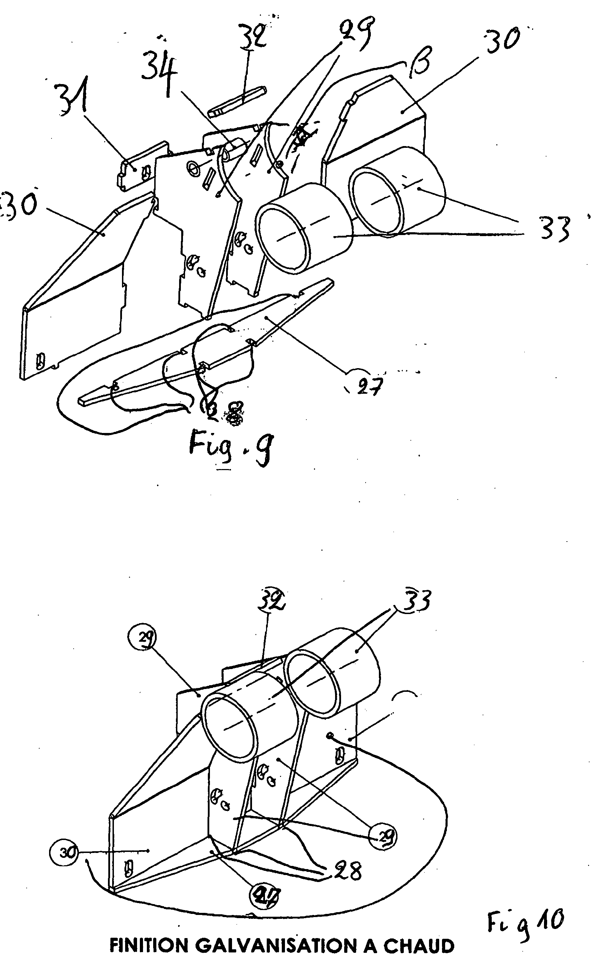

Le procédé de fabrication de chariot 2 représenté sur les figures 9 et 10 comprend :
- la réalisation d'une plaque 27, des entailles 28 sont usinées dans la plaque 27,
- de deux plaques 29 sensiblement en forme de L présentant un arrondi au niveau de l'angle du L et des perçages de passage,
- deux plaques 30 pliées sont fabriquées avec des bossages et sont symétriques,
- un écarteur 31 dans lequel est usinée une lumière,
- une entretoise 32,
- deux tubes cylindriques 33 de même dimension que les tubes cylindriques 26 serviront d'écarteurs,
- un tube rond 34.

L'assemblage se fait de la manière suivante : les deux plaques en L 29 sont placées grande longueur vers le bas dans les entailles centrales 28 et sur la plaque 27, l'entretoise 32 est placée en haut entre les deux plaques 29 pour éviter qu'elles ne bougent l'une par rapport à l'autre.

L'écarteur 31 est placé à l'extrémité de la petite branche du L entre les deux plaques 29.

Le tube rond 34 est placé entre les deux plaques 29 plus bas que l'entretoise 32.

Les tubes cylindriques 33 sont fixés sur les arrondis des plaques 29 en laissant entre elles la place d'un cylindre creux 26.

Les plaques pliées 30 sont placées de chaque côté sur les entailles 28 d'extrémité de la plaque 27, sur la partie arrière de la grande longueur du L des plaques 29 et sur les tubes cylindriques 33.

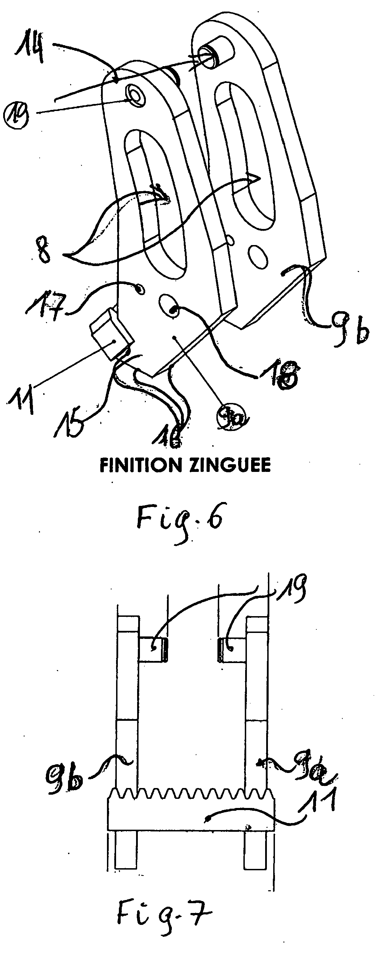

L'étape suivante toutes les pièces sont soudées entre elles et l'ensemble galvanisé à chaud il est précisé selon les normes du dessin industriel en Fig. 10 FINITION GALVANISATION A CHAUD. De la même manière la Fig.6 précisait FINITION ZINGUEE.

L'assemblage des composants se fait en intercalant les tubes cylindriques 33 du chariot 2 entre les cylindres creux 26 de la pelle 3 est en montant le tout sur le rail cylindrique 1.

Un axe de la deuxième bielle 10 est fixé pivotant à la partie inférieure du doigt 22.

L'ergot 21 forme axe et est fixé pivotant dans le tube rond 34 reliant les plaques 29 du chariot 2.

Une crémaillère 35 est fixée sur le châssis du dispositif de blocage.

Le fonctionnement du dispositif d'immobilisation obtenu par le procédé de fabrication ci-dessus est le suivant :
- Translation du chariot par action manuelle de l'utilisateur sur la poutre 1 de la position repos du chariot 2 à la position de la roue du véhicule au moyen de la poignée,
- Puis, actionnement de la poignée déclenchant :
   ▪ déploiement de la pelle 3 vers le haut,
   ▪ coulissement de l'axe de la poignée 5 vers le haut de la lumière 8,
   ▪ l'entrainement de l'axe de liaison des première(s) et deuxième(s) biellettes aux franchissements du plan médian par lequel passe les deux autres axes des biellettes 9, 9a, 9b, 10,
   ▪ franchissement verrouillant la pelle 3 en position de travail.

Un exemple de phases d'utilisation du dispositif selon l'invention est représentée ci-dessous. Cette exemple se rapporte au chargement ou le déchargement de marchandises d'un véhicule à un quai tel que décrit par le document FR 2 917 077 au nom de la demanderesse comprend les étapes de fonctionnement suivantes :

**Actions conduisant au calage et à la libération du véhicule**

| | | | |
|---|---|---|---|
| A1 | attente camion | A2 | fin opération de transbordement |
| B1 | feu vert extérieur allumé, le camion se met en place parallèlement à la poutre avec son rail de guidage | B2 | rangement niveleur |
| C1 | à l'intérieur du bâtiment ou de la zone de chargement le feu rouge est allumé, attente camion | C2 | feu rouge intérieur |
| D1 | l'utilisateur prend la poignée 5 du chariot | D2 | fermeture porte |
| | | E2 | chariot 2 déverrouillé |
| E1 | l'utilisateur avance le chariot. | F2 | l'utilisateur abaisse la pelle en actionnant la poignée 5 |
| F1 | l'utilisateur arrête le chariot au niveau du pneu | G2 | le camion est libre |
| G1 | l'utilisateur calle le chariot en translation | H2 | le feu extérieur est vert |
| H1 | l'utilisateur élève la pièce de Calage en actionnant la poignée 5 | | |
| I1 | le franchissement du plan médian par les axes des biellettes verrouille la pelle 3 en position travail | | |
| J1 | le chariot 9 est verrouillé | | |
| K1 | détection du blocage | | |
| L1 | le voyant « camion calé » est allumé | | |
| M1 | autorisation « ouverture porte » | | |
| N1 | détection « porte ouverte | | |
| O1 | autorisation niveleur | | |
| P1 | détection niveleur en place | | |
| Q1 | feu vert intérieur | | |
| A1 | l'opération de transbordement revient au commencement | | |

Si pendant soixante secondes, aucune des actions décrites précédemment ne se passaient, un gros voyant rouge clignotant situé sur le tableau électrique signalerait un défaut de fonctionnement.

Ainsi, à la fin du cycle le camion peut partir.

Le dispositif de blocage a pour but d'éviter les risques d'accident en immobilisant le véhicule par un système mécanique simple.

Ce dispositif selon l'invention s'adresse au personnel chargé du transbordement de marchandises et aux conducteurs.

Le dispositif agit sur la roue et bloque les mouvements de la remorque.

Ce dispositif est facilement manipulable, installable et s'adapte au plus grand nombre de chaussées tout en autorisant un blocage/déblocage rapide.

De conception robuste, il demande un entretien minimum et est peu encombrant.

Selon un mode de réalisation préféré de l'invention, une goupille mécanique 36 amovible assure la sécurité en position travail du dispositif par fixation sur le châssis du chariot 2 et contact avec au moins une bielle et la poignée 5.

Selon une variante avantageuse, la goupille 36 est actionnée par un moyen de déplacement de type électrique, mécanique ou pneumatique.

Selon un mode de réalisation particulièrement préféré de l'invention, le moyen de verrouillage du chariot 2 sur le moyen de guidage comprend une pièce de calage telle qu'une contre crémaillère formant une butée 11 sur une crémaillère 35 fixée sur le châssis afin de bloquer le chariot 2 en translation sur la poutre 1.

Selon d'autres modes de réalisation avantageux de l'invention
- le moyen de détection de position spécifiquement placé sur le chariot 2 est lié à un électro aimant qui déclenche une signalétique d'autorisation de chargement / déchargement depuis le quai en déverrouillant porte et niveleur ou autre système asservi de quai ;
- le chariot mobile 2 muni du moyen de verrouillage V et du moyen de détection à l'aide d'une cellule permettant d'identifier la présence d'une roue de camion est intelligent, le moyen de traitement de la mesure en vue du réglage étant obtenu par cette cellule étant lié à un dispositif électronique ou électromécanique lié au chariot 2, au moyen de verrouillage V et des déplacements correspondants, permettant de verrouiller le bras de blocage et ensuite d'autoriser l'ouverture de la porte du quai et le déploiement du niveleur en toute sécurité.

Le moyen de détection est intelligent en refusant l'autorisation d'ouverture porte M1, déploiement niveleur O1 conséquence de l'empêchement de verrouillage chariot J1 quand la cellule détecte une distance de bras trop éloignée de la roue à bloquer, quand la cellule détecte une distance du chariot à la roue suffisamment courte en permettant le verrouillage chariot J1 ce qui autorise l'ouverture porte M1 et le déploiement niveleur 01 et les différentes étapes successives qui suivent l'étape J1 dans le tableau ci-dessus.

L'efficacité du blocage est obtenue en plaçant le bras le plus près possible de la roue, à ce moment la cellule autorise le verrouillage chariot.

Ainsi, le dispositif de blocage :
- évite les chutes dans un espace qui s'ouvrirait entre le quai et le camion par :
   - L'immobilisation du camion à quai avec le verrouillage mécanique,
   - L'aide au positionnement du camion à quai avec le guidage mécanique,
- permet un blocage / déblocage rapide et permet d'accueillir des options tels que éclairage, caméra, abris chauffeur, etc...,
- s'adapte à tout type de véhicule en fonction des dimensions de roues, garde-boues, petite remorque, etc..,
- est le moins encombrant possible avec ses dimensions de longueur utile limitée à trois mètres ; ainsi que sa faible largeur.
- et demande peu ou pas de génie civil.

Bien que l'invention ait été décrite en liaison avec des structures particulières, elle n'y est nullement limitée et on peut y apporter de nombreuses variantes telles qu'une augmentation du nombre de biellettes ou le remplacement de certaines pièces telles que le remplacement de deux ergots par un tube plein traversant en entretoise ou le remplacement de la contre crémaillère 11 qui assemble les deux bielles 9a et 9b par une contre crémaillère par bielles respectives.

Les combinaisons des différentes réalisations représentées sur les figures ou décrites ci-dessus ne sortent pas du cadre de l'invention, dans la mesure ou celles-ci sont couvertes par les revendications attenantes.

### SIGNES DE REFERENCE

- 1.: poutre d'un moyen de guidage,
- 2.: chariot,
- 3.: pelle,
- 4.: tube de guidage,
- 5.: poignée,
- 6.: bras de pivotement,
- 7.: système de bielles,
- 8.: lumière en forme de haricot,
- 9.: première bielle,,
- 9a: première bielle,
- 9b: première bielle,
- 10.: deuxième bielle,
- 11.: butée, contre crémaillère,
- 12.: tube rond de manoeuvre,
- 13.: tige rectangulaire,
- 14.: extrémité de bielle,
- 15.: extrémité de bielle,
- 16.: surfaces rectilignes,
- 17.: trous,
- 18.: trous,
- 19.: ergot,
- 20.: ergot,
- 21.: ergot,
- 22.: doigt,
- 23.: flasque,
- 24.: flasque,
- 25.: renforts,
- 26.: tubes cylindriques creux,
- 26a.: renfort arrière
- 27.: plaque de base chariot,
- 28.: entaille,
- 29.: plaques en L,
- 30.: plaques pliées,
- 31.: écarteur,
- 32.: entretoise,
- 33.: tubes cylindriques,
- 34.: tube rond,
- 35.: crémaillère,
- 36.: goupille
- α: angle,
- β: angle
- a: emplacement chariot,
- b: emplacement chariot,
- c: emplacement chariot.
- C: pièce de calage
- G: moyen de guidage latéral
- P: mécanisme de positionnement
- R: direction de roulement
- V: moyen de verrouillage

## Revendications

1. Dispositif d'immobilisation de véhicule de transport de marchandises pendant les phases de transbordement dudit véhicule, par action sur le pneu d'une de ses roues, comprenant un moyen de guidage latéral dudit véhicule positionné parallèle à la direction de roulement du véhicule à immobiliser, un chariot mobile (2) le long dudit moyen de guidage, un moyen de placement dudit chariot le long du moyen de guidage et un moyen de verrouillage dudit chariot sur ledit moyen de guidage, une pièce de calage dont une extrémité est fixée sur le châssis du dispositif, un mécanisme de positionnement de ladite pièce de calage, le moyen de guidage étant typiquement un châssis comprenant notamment une poutre (1) un rail et deux plots **caractérisé par** le chariot (2) présentant une forme simple comprenant au moins un tube de guidage (4) sur la poutre (1) et des pièces support d'au moins une pelle (3) pivotante du bas vers le haut, de la position repos vers la position arrêt dite travail, une poignée (5) composée du moyen de déplacement permet d'actionner manuellement le déplacement du chariot (2) sur la poutre (1) et également la mise en place de la pelle support du bras par pivotement (6) sous l'effet d'un système de bielles (7), l'extrémité de la tige poignée (5) se déplaçant dans la lumière ovale en forme de haricot central d'au moins une première bielle (9) articulée à extrémité liée en rotation à au moins une deuxième bielle (10) liée en rotation à la pelle ; la première bielle (9) étant liée en rotation au chariot et sa deuxième extrémité étant équipée d'une butée (11) venant verrouiller le chariot en position travail sur le châssis du chariot, l'emplacement des axes des biellettes verrouillant la pelle (3) en position travail, position haute.

2. Dispositif bloqueur de véhicule selon la revendication 1 dans lequel le bras de pivotement se déplace dans les lumières de deux premières bielles (9a, 9b) à lumière en forme de haricot (8) pour répartir les forces appliquées.

3. Dispositif bloqueur de véhicule selon l'une des revendications précédentes dans lequel une goupille mécanique amovible (36) assure la sécurité en position travail dudit dispositif par fixation sur le châssis du chariot (2) et contact avec au moins une bielle (9, 10) et la poignée (5).

4. Dispositif bloqueur de véhicule selon la revendication précédente dans lequel la goupille (36) est actionnée par un moyen de déplacement de type électrique, mécanique ou pneumatique.

5. Dispositif bloqueur de véhicule selon l'une des revendications précédentes dans lequel le moyen de verrouillage du chariot (2) sur le moyen de guidage comprend une pièce de calage telle qu'une contre crémaillère formant une butée (11) sur une crémaillère (35) fixée sur le châssis afin de bloquer le chariot en translation sur le rail.

6. Dispositif bloqueur de véhicule selon l'une des revendications précédentes, dans lequel le moyen de détection de position spécifiquement placé sur le chariot (2) est lié à un électro aimant qui déclenche une signalétique d'autorisation de chargement / déchargement depuis le quai en déverrouillant porte et niveleur ou autre système asservi de quai.

7. Dispositif bloqueur de véhicule selon l'une des revendications précédentes, dans lequel le chariot mobile (2) muni du moyen de verrouillage (V) et du moyen de détection à l'aide d'une cellule permettant d'identifier la présence d'une roue de camion est intelligent en refusant l'autorisation d'ouverture porte (M1), déploiement niveleur (O1) conséquence de l'empêchement de verrouillage chariot (J1) quand la cellule détecte une distance de bras trop éloignée de la roue à bloquer, quand la cellule détecte une distance du chariot à la roue suffisamment courte en permettant le verrouillage chariot (J1) ce qui autorise l'ouverture porte (M1) et le déploiement niveleur (O1).

8. Procédé de mise en oeuvre du dispositif de blocage manuel d'un véhicule conforme aux revendications précédentes comprenant les étapes suivantes :
- Translation du chariot par action manuelle de l'utilisateur sur la poutre (1) de la position repos du chariot (2) à la position de la roue du véhicule au moyen de la poignée (5),
- Puis, actionnement de la poignée (5) déclenchant :
▪ déploiement de la pelle (3) vers le haut,
▪ coulissement de l'axe de la poignée (5) vers le haut de la lumière (8),
▪ l'entrainement de l'axe de liaison des première(s) et deuxième(s) biellettes aux franchissements du plan médian par lequel passe les deux autres axes des biellettes (9, 9a, 9b, 10),
▪ franchissement du plan médian verrouillant la pelle (3) en position de travail.

9. Procédé de fabrication d'un chariot simple et universel adapté à un rail aussi bien droite ou gauche de stationnement blocage de véhicule par assemblage et réglage d'au moins une pelle pivotante un bras poignée symétriques et des bielles conformes à ceux décrits dans les revendications 1, 2, 3, 4, 5, 6 ou 7.

10. Utilisation d'un dispositif selon l'une quelconque des revendications 1 à 7 pour le chargement ou le déchargement de marchandises d'un véhicule à un système de chargement et déchargement comprenant des moyens :
▪ de signalétique, notamment attente véhicule (A1, C1, C2),
▪ d'immobilisation manuelle,
▪ d'attente camion avant calage (A1),
▪ de décompte du temps entre deux signaux,
▪ d'ouverture porte (M, N),
▪ de mise en place du niveleur (O, P),
▪ de chargement ou déchargement,
▪ de rangement du niveleur (U),
▪ de fermeture de porte (T),
▪ d'autorisation du décalage,
▪ du déblocage camion,
▪ du rangement chariot.

## Patentansprüche

1. Vorrichtung zum Immobilisieren eines Lastkraftwagens während der Umladephasen des Fahrzeugs durch Einwirken auf den Reifen eines seiner Räder, umfassend eine parallel zur Fahrtrichtung des zu immobilisierenden Fahrzeugs positionierte seitliche Führungseinrichtung des Fahrzeugs, einen entlang der Führungseinrichtung beweglichen Schlitten (2), eine Einrichtung zum Verschieben des Schlittens entlang der Führungseinrichtung und eine Einrichtung zum Verriegeln des Schlittens an der Führungseinrichtung, ein Keilstück, das mit einem Ende am Rahmen der Vorrichtung befestigt ist, einen Mechanismus zum Positionieren des Keilstücks, wobei die Führungseinrichtung typischerweise ein Rahmen ist, der insbesondere einen Träger (1), eine Schiene und zwei Klötze umfasst, **dadurch gekennzeichnet, dass** der Schlitten (2) eine einfache Form aufweist mit mindestens einem Führungsrohr (4) auf dem Träger (1) und Halterungsteilen für mindestens einen Heber (3), der von unten nach oben, von der Ruhestellung zu der Stoppstellung, genannt Arbeitsstellung, schwenkbar ist, ein Griff (5), der aus der Einrichtung zum Verschieben besteht, ein manuelles Verschieben des Schlittens (2) auf dem Träger (1) und ferner das Instellungbringen des den Ausleger (6) tragenden Hebers durch Verschwenken unter der Wirkung eines Systems von Verbindungsgestängen (7) erlaubt, wobei sich das Ende der Griffstange (5) in den zentralen nierenförmig ovalen Durchlass mindestens eines ersten Verbindungsgestänges (9) bewegt, das am Ende angelenkt und mit mindestens einem zweiten Verbindungsgestänge (10) drehbar verbunden ist, welches mit dem Heber drehbar verbunden ist; wobei das erste Verbindungsgestänge (9) mit dem Schlitten drehbar verbunden ist und sein zweites Ende mit einem Anschlag (11) versehen ist, der den Schlitten an dem Rahmen des Schlittens in der Arbeitsposition verriegelt, wobei die Stellung der Achsen der Gestänge den Heber (3) in der Arbeitsposition, hohen Position, verriegelt.

2. Fahrzeug-Blockiervorrichtung nach Anspruch 1, wobei sich der Schwenkausleger in den Durchlässen von zwei ersten Verbindungsgestängen (9a, 9b) mit nierenförmigem Durchlass (8) bewegt, um die aufgebrachten Kräfte zu verteilen.

3. Fahrzeug-Blockiervorrichtung nach einem der vorangehenden Ansprüche, wobei ein herausnehmbarer mechanischer Arretierstift (36) die Vorrichtung durch Befestigung auf dem Rahmen des Schlittens (2) und Kontakt mit mindestens einem Verbindungsgestänge (9, 10) und dem Griff (5) in der Arbeitsposition sichert.

4. Fahrzeug-Blockiervorrichtung nach dem vorangehenden Anspruch, wobei der Arretierstift (36) mittels einer Verschiebeeinrichtung vom elektrischen, mechanischen oder pneumatischen Typ betätigt wird.

5. Fahrzeug-Blockiervorrichtung nach einem der vorangehenden Ansprüche, wobei die Einrichtung zum Verriegeln des Schlittens (2) an der Führungseinrichtung ein Keilstück wie eine Gegenzahnstange umfasst, das einen Anschlag (11) auf einer an dem Rahmen befestigten Zahnstange (35) bildet, um den Schlitten gegen Verschieben auf der Schiene zu blockieren.

6. Fahrzeug-Blockiervorrichtung nach einem der vorangehenden Ansprüche, wobei die speziell auf dem Schlitten (2) angeordnete Positionsdetektiereinrichtung mit einem Elektromagneten verbunden ist, der von der Rampe aus eine Be-/Entladefreigabe-Signalgebung auslöst, indem er eine Klappe und Ladebrücke oder ein anderes Rampenregelsystem entriegelt.

7. Fahrzeug-Blockiervorrichtung nach einem der vorangehenden Ansprüche, wobei der mit der Verriegelungseinrichtung (V) und der Detektiereinrichtung versehene bewegliche Schlitten (2) mit Hilfe einer Zelle, mit der das Vorliegen eines Lastkraftwagenrades feststellbar ist, intelligent ist, indem er die Freigabe zum Öffnen der Klappe (M1), Auslegen der Überladebrücke (O1) infolge der Verhinderung des Verriegelns des Schlittens (J1) verweigert, wenn die Zelle einen von dem zu blockierenden Rad zu weit entfernten Abstand des Auslegers detektiert, und indem er die Verriegelung des Schlittens (J1) erlaubt, wenn die Zelle einen ausreichend kurzen Abstand des Schlittens zum Rad detektiert, was das Öffnen der Klappe (M1) und das Auslegen der Ladebrücke (O1) erlaubt.

8. Verfahren zum Anwenden der Vorrichtung zum manuellen Blockieren eines Fahrzeugs nach den vorangehenden Ansprüchen, umfassend die folgenden Schritte:
- Verschieben des Schlittens durch manuelles Einwirken des Nutzers auf den Träger (1) aus der Ruhestellung des Schlittens (2) zur Position des Fahrzeugrades mittels des Griffs (5),
- dann Betätigen des Griffs (5), was auslöst:
• Ausfahren des Hebers (3) nach oben,
• Gleitverschieben der Achse des Griffs (5) nach oben in dem Durchlass (8),
• Mitführen der Verbindungsachse des/der ersten und zweiten Gestänge(s) zu den Durchquerungspunkten der Mittelebene, durch welche die beiden anderen Achsen der Gestänge (9, 9a, 9b, 10) verlaufen,
• Durchqueren der Mittelebene und dabei Verriegeln des Hebers (3) in der Arbeitsstellung.

9. Verfahren zum Herstellen eines einfachen und universellen Schlittens, der sowohl für eine linke als auch für eine rechte Schiene zum Blockieren eines Fahrzeugs ausgelegt ist, durch Zusammenbau und Einstellen mindestens eines Schwenkhebers, eines symmetrischen Griffarms und Gestängen gemäß den in den Ansprüchen 1, 2, 3, 4, 5, 6 oder 7 beschriebenen.

10. Verwendung einer Vorrichtung nach einem der Ansprüche 1 bis 7 zum Beladen oder Entladen von Waren eines Fahrzeugs mit einem Belade- und Entladesystem, umfassend Einrichtungen:
• zur Signalgebung, insbesondere zum Halten eines Fahrzeugs (A1, C1, C2),
• zur manuellen Immobilisierung,
• zum Halten eines Lastkraftwagens vor dem Verkeilen (A1),
• zum Zählen der Zeit zwischen zwei Signalen,
• zum Öffnen der Klappe (M, N),
• zum Instellungbringen der Ladebrücke (O, P),
• zum Beladen oder Entladen,
• zum Zurückstellen der Ladebrücke (U),
• zum Schließen der Klappe (T),
• zur Keilentfernungsfreigabe,
• zum Deblockieren des Lastkraftwagens,
• zum Zurückstellen des Schlittens.

## Claims

1. Device for immobilising a goods transport vehicle during the docking phases of the said vehicle, by action on the tyre of one of its wheels, comprising a lateral means of guiding the said vehicle positioned parallel to the direction of movement of the vehicle to be immobilised, a carriage (2) moving along the said guiding means, a means of moving the said carriage along the said guiding means and a means of locking the said carriage on the said guiding means, a chocking part one end of which is fixed on the frame of the device, a mechanism for positioning the said chocking part, the guiding means being typically a frame comprising in particular a beam (1), a rail and two end blocks, **characterised by** the carriage (2) having a simple form comprising at least one guide tube (4) on the beam (1) and parts supporting at least one spade (3) pivoting upwards, from the rest position to the stop or so-called work position, a handle (5) comprising the means of movement enabling the movement of the carriage (2) on the beam (1) to be actuated manually and also the spade supporting the arm to be moved into place by being pivoted (6) under the effect of a system of links (7), the end of the handle rod (5) moving in a central oval, bean-shaped hole in at least a first articulated link (9) with one end connected rotationally to at least a second link (10) connected rotationally to the spade; the first link (9) being connected rotationally to the carriage and its other end being equipped with a stop (11) serving to lock the carriage in the work position on the carriage frame, the position of the pins of the links locking the spade (3) in the raised work position.

2. Vehicle blocking device according to claim 1, wherein the pivoting arm moves in holes in two first links (9a, 9b) with bean-shaped holes (8) to distribute the forces applied.

3. Vehicle blocking device according to any of the preceding claims, wherein a removable mechanical pin (36) secures the said device in the work position by fixing on the carriage frame (2) and contact with at least one link (9,10) and the handle (5).

4. Vehicle blocking device according to the preceding claim, wherein the pin (36) is actuated by a means of movement that may be electrical, mechanical or pneumatic.

5. Vehicle blocking device according to any of the preceding claims, wherein the means of locking the carriage (2) on the guiding means comprises a chocking part such as a counter-rack forming a stop (11) on a rack (35) fixed onto the frame in order to block the travel of the carriage on the rail.

6. Vehicle blocking device according to any of the preceding claims, wherein the position detection means placed specifically on the carriage (2) is connected to an electromagnet which triggers a signal authorising loading/unloading from the dock by unlocking the door and dock leveller or another interlocked dock system.

7. Vehicle blocking device according to any of the preceding claims, wherein the mobile carriage (2) equipped with the locking means (V) and the detection means using a cell able to identify the presence of a truck wheel is intelligent, refusing permission to open the door (M1) and deploy the dock leveller (O1), as a consequence of the locking of the carriage being prevented (J1) when the cell detects too great a distance from the carriage to the wheel to be blocked, whilst when the cell detects a short enough distance from the carriage to the wheel it allows the locking of the carriage (J1), which then authorises the opening of the door (M1) and the deployment of the dock leveller (01).

8. Method of implementing the manual vehicle blocking device in accordance with the preceding claims comprising the following stages:
- Travel of the carriage on the beam (1) from the carriage (2) rest position to the position of the vehicle wheel manually actuated by the user by means of the handle (5),
- Then operation of the handle (5) leading to:
▪ deployment of the spade (3) upwards,
▪ sliding of the (5) handle pin upwards in the hole (8),
▪ driving of the link pin of the first and second links to the crossing points of the median plane through which pass the two other pins of the links (9, 9a, 9b, 10),
▪ crossing of the median plane locking the spade (3) in the work position.

9. Method of manufacturing a simple universal device suitable for a rail on either the left or right side of a parked vehicle for blocking that vehicle, by assembly and adjustment of at least one pivoting spade, a symmetrical handle arm and links compliant with those described in claims 1, 2, 3, 4, 5, 6 and 7.

10. Use of a device according to any of claims 1 to 7 for the loading or unloading of goods on a vehicle with a loading and unloading system comprising means for:
▪ signalling, in particular vehicle waiting (A1, C1, C2),
▪ manual immobilisation,
▪ vehicle waiting before chocking (A1),
▪ counting the time between two signals,
▪ opening the door (M, N),
▪ positioning the dock leveller (O, P), loading or unloading,
▪ returning the dock leveller to its rest position (U),
▪ closing the door (T),
▪ authorising the removal of the chock,
▪ releasing the truck, '
▪ returning the carriage to its rest position
